**Europäisches Patentamt**

(19) **European Patent Office**

**Office européen des brevets**

(11) Publication number : **0 336 738 B1**

# (12) EUROPEAN PATENT SPECIFICATION

(45) Date of publication of patent specification :
**11.11.92 Bulletin 92/46**

(51) Int. Cl.⁵ : **G02B 6/44**

(21) Application number : **89303371.2**

(22) Date of filing : **05.04.89**

(54) **Manufacture of a circumferentially rigid flexible tube or an optical cable.**

(30) Priority : **06.04.88 GB 8808039**

(43) Date of publication of application :
**11.10.89 Bulletin 89/41**

(45) Publication of the grant of the patent :
**11.11.92 Bulletin 92/46**

(84) Designated Contracting States :
**AT BE CH DE ES FR GR IT LI LU NL SE**

(56) References cited :
**EP-A- 0 113 377
CH-A- 661 800
DE-A- 3 224 489
FR-A- 2 342 508
US-A- 4 059 951**

(73) Proprietor : **BICC Public Limited Company
Devonshire House Mayfair Place
London W1X 5FH (GB)**

(72) Inventor : **Harvey, Peter
5, McKay Road
Wimbledon London, SW20 OHT (GB)**

(74) Representative : **Ross Gower, Edward Lewis et al
BICC plc Patents & Licensing Department
Quantum House Maylands Avenue
Hemel Hempstead, Herts. HP2 4SJ (GB)**

Jouve, 18, rue Saint-Denis, 75001 PARIS

## Description

This invention relates to optical cables for the transmission of the ultra-violet, visible and infra-red regions of the electromagnetic spectrum, which regions, for convenience, will hereinafter all be included in the generic term "light" and especially, but not exclusively, to optical cables for use in the communications field adapted for transmission of light having a wavelength within the range 0.8 to 2.1μm.

The invention is particularly concerned with an optical cable element for use in such an optical cable, which optical cable element includes a substantially circumferentially rigid longitudinally flexible tube loosely housing at least one flexible optical guide and comprising a plurality of flexible elongate bodies, each having a transverse cross-section approximating to a sector of an annulus, helically laid-up together, each of which bodies throughout its length is made of a multiplicity of longitudinally stressed elongate flexible non-metallic reinforcing elements each substantially encapsulated in extruded electrically insulating plastics material, the multiplicity of non-metallic reinforcing elements being substantially evenly distributed throughout the cross-sectional area of the tube. Such an optical cable element will, for convenience, hereinafter be referred to as "an optical cable element as hereinbefore described".

In DE-A-3224489 there is described and illustrated an optical cable having a sheath approximating in form to the substantially circumferentially rigid longitudinally flexible tube of the optical cable element as hereinbefore described.

It is an object of the present invention to provide an improved method of manufacturing an optical cable element as hereinbefore described.

According to the invention the improved method comprises the steps of drawing a multiplicity of flexible elongate non-metallic reinforcing elements under tension in the directions of their lengths through electrically insulating plastics material which is in a liquid or semi-liquid state; causing the multiplicity of non-metallic reinforcing elements encapsulated in electrically insulating plastics material in a liquid or semi-liquid state to pass through an elongate die having an outlet orifice having a transverse cross-section approximating to a sector of an annulus to form an flexible elongate body which has a transverse cross-section approximating to a sector of an annulus and in which the multiplicity of non-metallic reinforcing elements are substantially evenly distributed throughout the cross-sectional area of the body, which die, between its ends, is of such a shape that non-metallic reinforcing elements constituting and adjacent to the outer arcuate surface of the flexible elongate body so formed are travelling at a greater linear speed than non-metallic reinforcing elements remote therefrom; causing the flexible elongate body as it emerges from the die follow a helical path within an imaginary cylinder of substantially circular cross-section in such a way that the convex outer arcuate surface of the body is maintained outermost and so treating the helically advancing body that the plastics material in which the reinforcing elements are encapsulated sets; laying up the helically advancing flexible elongate body with a plurality of helically advancing flexible elongate bodies of similar transverse cross-section and construction to form a flexible tube of approximately circular transverse cross-section which is rotating about its longitudinal axis and feeding at least one flexible optical guide into the bore of the tube as it is being formed; and taking up the flexible tube thus formed in such a way that any residual torsion in the tube arising from said rotation is removed.

Preferably, the flexible elongate bodies are manufactured concurrently and are assembled together at a single assembly station but, in some circumstances, a single flexible elongate body may be assembled with another flexible elongate body or with a sub-assembly of at least two flexible elongate bodies at each of a plurality of longitudinally spaced assembly stations.

Between its ends, the elongate die preferably follows a smoothly curved arcuate path, the internal surface of the die defining the convex outer arcuate surface of the flexible elongate body having the greater radius of curvature. By virtue of the fact that the elongate die between its ends follows a smoothly curved path, the non-metallic reinforcing elements immediately adjacent that part of the inner surface of the die having the greater radius of curvature will travel under tension at a linear speed greater than that of the non-metallic reinforcing elements remote therefrom. Preferably, over at least a major part of the length of the smoothly curved elongate die, the internal surface of the die defining the convex outer arcuate surface of the flexible elongate body and the internal surface of the die defining the concave inner arcuate surface of the flexible elongate body are so curved that the transverse cross-section of the smoothly curved elongate die is substantially constant in shape and size to ensure that the non-metallic reinforcing elements are drawn under tension through the die at the desired linear speeds relative to one another.

At its entry end, the elongate die preferably opens into and forms part of an open-topped chamber into which the electrically insulating plastics material in a liquid or semi-liquid state is fed, preferably through an inlet port intermediate of the ends of the die. The multiplicity of flexible elongate non-metallic reinforcing elements preferably are drawn under tension approximately vertically downwardly into the open topped chamber of electrically insulating plastics material in a liquid or semi-liquid state.

In order to cause the flexible elongate body as it emerges from the die to follow a helical path within an imaginary cylinder of substantially circular transverse cross-section in such a way that the convex outer arcuate surface of the body is maintained outermost, preferably immediately downstream of the smoothly curved die the flexible elongate body passes into a helically extending channel of a transverse cross-section approximating to a sector of an annulus in the outer surface of a substantially rigid elongate member and, as the flexible elongate body travels along the helically extending channel, the electrically insulating plastics material in which the non-metallic reinforcing elements are encapsulated is so treated that it is caused to set. Preferably, the helically grooved rigid elongate member is enclosed within a tightly fitting tube of substantially circular cross-section in order to provide an outer boundary surface of arcuate shape for the helical groove.

Preferably, the smoothly curved arcuate path of the elongate die and the shape of the helically extending channel of the rigid elongate member are so related that the relative positions of the non-metallic reinforcing elements within the flexible elongate body being formed are maintained substantially constant and the transition from the single curve of the elongate die to the compound curve of the helically extending channel is accomplished without any undesirable strain being imposed on the elements. There may be some relative movement between adjacent or neighbouring elements which the semi-liquid state of the electrically insulating plastics material allows.

The flexible elongate body is drawn through the smoothly curved die and helically channelled elongate member by any convenient means. Having regard to the relatively slow speed at which the flexible elongate body is formed, the drawing means preferably takes the form of a pair of longitudinally spaced and reciprocating clamps each of which intermittently and out of sequence with the other grips the advancing body, advances a predetermined distance, releases the body and returns to its original position so that the body is drawn continuously from the smoothly curved die; alternatively, the drawing means may be a pair of driven endless belts which are rotatably driven bodily around the axis of the helically advancing body.

The take up means by which any residual torsion is removed from the rotating flexible tube may be a drum twister or it may take the form of a rotatably driven turntable on to which the rotating flexible tube is so coiled that any residual torsion is removed.

Preferably, the flexible optical guide is drawn from a source of supply by longitudinally spaced and reciprocating clamps operating in a manner similar to that of, and preferably mechanically coupled to, the clamps of the other drawing means. The source of supply of flexible optical guide preferably is so mounted that it is bodily rotatable in space and is operatively coupled to the take up means so that, when the take up means rotates to remove any residual torsion from the rotating flexible tube, the source of supply of flexible optical guide rotates to remove any twist in the optical guide that would otherwise be imparted by rotation of the advancing flexible tube about its longitudinal axis.

The flexible elongate bodies may be assembled together by feeding the bodies helically around a substantially rigid tubular mandrel of substantially circular cross-section which has an external diameter substantially equal to the internal diameter of the circumferentially rigid tube being formed and into the trailing end of the bore of which said at least one flexible optical guide is drawn.

Downstream of the rigid tubular mandrel at least one tape of electrically insulating material or other flexible binder may be helically lapped around the laid up flexible elongate bodies, the direction of lay of the helically wound tape being opposite to that of the laid up bodies.

The flexible elongate non-metallic reinforcing elements preferably are made of an aromatic polyamide such as that sold under the trade name 'Kevlar'; alternative non-metallic materials of which they may be made include non-optical glass and carbon.

The electrically insulating plastics material in which the non-metallic reinforcing elements are encapsulated preferably is a thermoplastics material, such as polypropylene or nylon but, in some circumstances, it may be a thermosetting plastics material, such as a polyester or epoxy resin or polyurethane.

Other electrically insulating plastics materials in which the non-metallic reinforcing elements may be encapsulated are thermotropic liquid crystalline polymers such as wholly aromatic polyesters, aromatic-aliphatic polyesters, aromatic polyazomethines, aromatic polyester-carbonates and wholly or non-wholly aromatic polyester amides.

Where the plastics material in which the non-metallic reinforcing elements are encapsulated is a thermoplastics material, the plastics material will be introduced into the chamber at such a temperature that the material is in a liquid or semi-liquid state and the chamber and/or elongate die will be heated to maintain the material at that temperature. Cooling air will be directed on to the helically grooved elongate member in order to cause the plastics material to set.

Where the plastics material is a thermosetting material, the helically grooved elongate member will be heated in order to cause the plastics material to set.

The optical cable element as hereinbefore described manufactured by the improved method of the invention has the important advantage that an optical cable of which it forms a part is so flexible that it can be readily handled, and wound on and unwound from a cable drum, without substantially any risk of danger to an operative arising from an inherent torsion or stiffness in the cable. Moreover, the flexibility of the longitudinally flexible tube of the optical cable element is such that an optical cable having an optical cable element manufactured by the improved method of the invention can be readily strung in long lengths between poles, towers or other upstanding supports and used as an aerial cable. An optical cable element manufactured by the improved method of the invention has the further important advantage that the multiplicity of non-metallic reinforcing elements are distributed substantially evenly throughout each flexible elongate body of the longitudinally flexible tube of the element and that, as a consequence when a cable incorporating the optical cable element is stressed, strain is applied substantially evenly across the transverse cross-sections of all the flexible elongate bodies.

The invention is further illustrated by a description, by way of example, of three preferred forms of optical cable including an optical cable element manufactured by the method of the invention and of the preferred method of manufacturing one of said preferred forms of optical cable with reference to the accompanying drawings, in which:-

Figure 1 is a transverse cross-sectional view, drawn on an enlarged scale, of a first preferred form of optical cable;

Figure 2 is a transverse cross-sectional view, drawn on an enlarged scale, of a second preferred form of optical cable;

Figure 3 is a transverse cross-sectional view, drawn on an enlarged scale, of a third preferred form of optical cable;

Figure 4 is a schematic representation of the apparatus employed in the manufacture of the optical cable element of the optical cable shown in Figure 3, and

Figure 5 is a diagrammatic side view, partly in section and partly in elevation, of one preferred elongate die and helically grooved rigid elongate member for forming a flexible elongate body having a transverse cross-section approximating to a sector of an annulus.

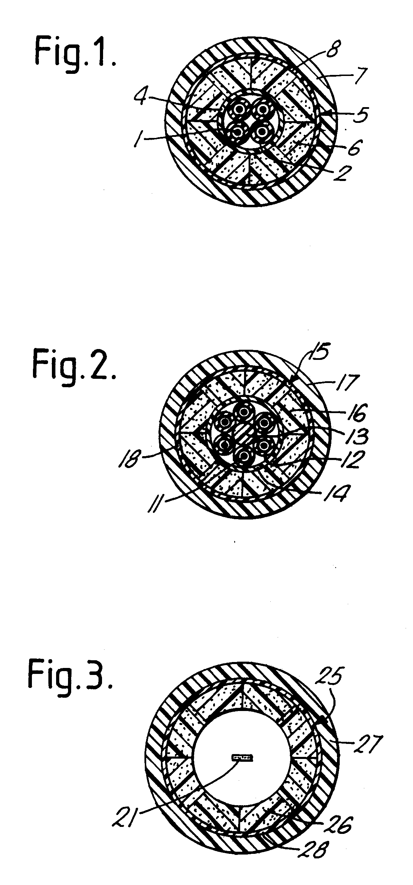

The first preferred form of optical cable shown in Figure 1 comprises four plastics tubes 2, in each of which a separate optical fibre 1 is loosely housed and which are helically laid-up together to form an optical cable element around which is helically wound a plastics tape 4. The taped optical cable element is surrounded by a substantially circumferentially rigid flexible tube 5 which has an overall diameter of 15mm and an internal diameter of 7.5mm and which is of a composite form comprising eight elongate flexible bodies 6, each of a cross-section approximating to a sector of an annulus, helically laid up together with a lay length of 200mm. Each elongate body 6 comprises extruded electrically insulating thermoplastics material and a multiplicity of longitudinally stressed flexible elongate reinforcing elements of an aromatic polyamide each substantially encapsulated in said thermoplastics material, the multiplicity of reinforcing elements being substantially evenly distributed throughout the cross-sectional area of the body and the proportion of reinforcing elements in the composition lying in the range 60 to 70% by volume. A layer 8 of helically lapped plastics tape overlies the circumferentially rigid flexible tube 5 and is surrounded by a protective sheath 7 of plastics material. It will be appreciated that since each of the optical fibres 1 is loosely housed in a plastics tube 2 of the optical cable element, each optical fibre is movable relative to the circumferentially rigid tube 5.

In the second preferred form of optical cable shown in Figure 2, the optical cable element comprises a central flexible elongate reinforcing member 13 of a resin bonded aromatic polyamide around which are helically laid six plastics tubes 12 in each of which a separate optical fibre 11 is loosely housed. The optical cable element has a plastics tape 14 helically lapped around the assembly of tubes to hold them together. A substantially circumferentially rigid flexible tube 15 of the same construction as that of the tube 5 of the optical cable shown in Figure 1 surrounds the taped optical cable element and a layer 18 of helically lapped plastics tape overlies the tube and is surrounded by a protective sheath 17 of plastics material.

The third preferred form of optical cable shown in Figure 3 comprises a substantially circumferentially rigid flexible tube 25 of composite form which comprises eight flexible elongate bodies 26, each of a cross-section approximating to a sector of an annulus, helically laid-up together. Each of the elongate bodies 36 is of the same composition as that of the elongate bodies 6 of the tube 5 of the optical cable shown in Figure 1. An optical fibre ribbon structure 21 is loosely housed in the bore of the circumferentially rigid tube 25 and a layer 28 of helically lapped plastics tape overlies the tube and is surrounded by a protective sheath 27 of plastics material.

In the optical cable shown in Figure 3, the optical fibre ribbon structure may comprise a plurality of optical fibres and at least one flexible elongate reinforcing element of substantially resilient material arranged side-by-side and embedded in an elongate body of plastics material, the or each resilient reinforcing element being set in such a form that the ribbon structure follows a path of smoothly curved undulations Whose axes of curvature lie transverse to the longitudinal axis of the ribbon structure, the arrangement being such that, when the undulating ribbon structure is subjected to a tensile force, the ribbon structure straightens in a lengthwise direction against the action of the undulating resilient reinforcing element or elements thereby reducing the tensile force applied to the optical fibres and, when the tensile force is removed, the ribbon structure returns towards its original undulating form.

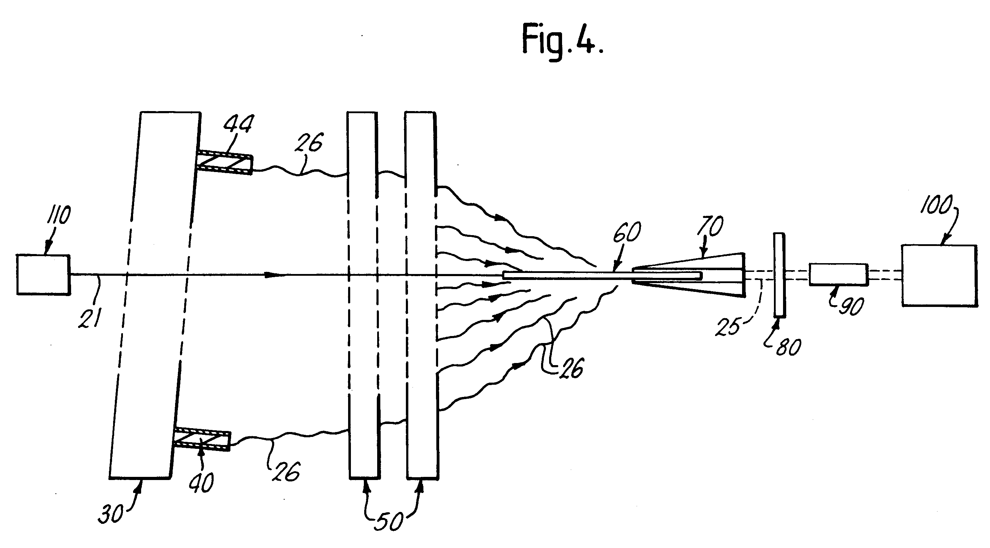

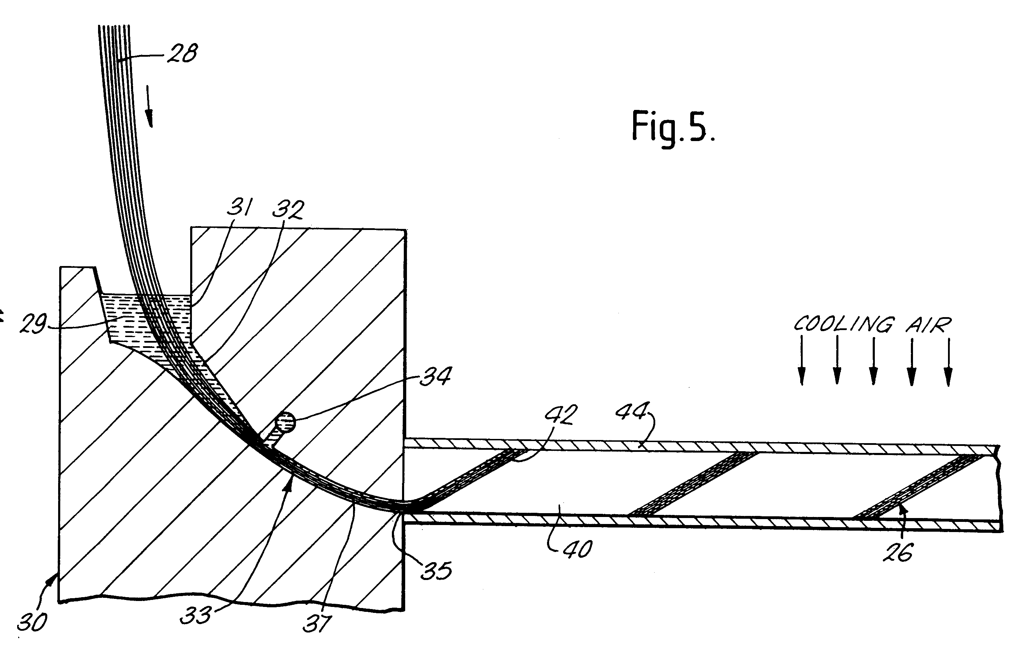

Referring to Figures 4 and 5, the apparatus employed in the manufacture of the circumferentially rigid flexible tube 25 of the optical cable shown in Figure 3 comprises eight chambers and associated dies generally referred to at 30 and eight helically channelled rigid rods 40, one of which is associated with each die. Downstream of the eight chambers and associated dies 30 and helically channelled rods 40 are eight pairs of reciprocating two-part clamps generally referred to at 50 by means of which elongate flexible bodies 26 each having a transverse cross-section approximating to a sector of an annulus are drawn from the dies and helically channelled rods. Each two-part clamp has in its clamping surface a helical slot in which a flexible body 26 can be so gripped that helical advance of the body is temporarily restrained. Downstream of the reciprocating clamps 50 is a rigid tubular mandrel 60, a forming die 70, a taping head 80 and a pair of reciprocating two-part clamps 90 for drawing the circumferentially rigid flexible tube through the forming die, which reciprocating clamps are mechanically coupled to the clamps 50. Downstream of the clamps 90 is a turntable 100 that can be rotatably driven to remove any residual torsion from the flexible tube. A source 110 of optical fibre ribbon 21 is provided for feeding optical fibre ribbon into the upstream end of the tubular mandrel 60.

As will be seen on referring to Figure 5, each of the eight chambers and dies 30 comprises an open topped chamber 31 which, at the bottom of the chamber, blends by means of a passage 32 into a smoothly curved elongate die 33 which, between its ends, follows a smoothly curved arcuate path and has a substantially constant transverse cross-section approximating to a sector of an annulus. Intermediate of the ends of the die 33 is an inlet port 34 by means of which electrically insulating plastics material 29 in a semi-liquid state can be fed into the die and hence the open topped chamber 31. The internal surface of the die 33 defining the convex outer arcuate surface of the flexible elongate body 26 has the greater radius of curvature and, over a major part of the smoothly curved elongate die, the internal surface of the die defining the convex outer arcuate surface of the flexible elongate body and the internal surface of the die defining the concave inner arcuate surface of the elongate body are so curved that the transverse cross-section of the die is substantially constant in shape and size to ensure that the non-metallic reinforcing elements 28 are drawn through the die at the desired linear speed relative to one another. At its downstream outlet end 35, the elongate die 33 opens into one end of a helically extending channel 42 in the outer surface of a rigid rod 40 which extends substantially horizontally from the body of the chamber 31. A rigid tube 44 fits tightly around the helically channelled rod 40. The channel 42 has a transverse cross-section bounded by the radially extending side walls and smaller arcuate side wall of a sector of an annulus, and by the internal surface of the tube 44.

In use, a multiplicity of flexible reinforcing elements 28 of aromatic polyamide are drawn under tension in the direction of their lengths downwardly through electrically insulating thermoplastics material 29 which is continuously fed into the open topped chamber 31 through the inlet port 34 and which is at such a temperature that the thermoplastics material is in a semi-liquid state. The multiplicity of reinforcing elements 28 encapsulated in electrically insulating plastics material in a semi-liquid state pass through the elongate die 33 to form an elongate flexible body 26 which has a transverse cross-section approximating to a sector of an annulus and in which the multiplicity of reinforcing elements are substantially evenly distributed throughout the cross-sectional area of the body.

Immediately downstream of the smoothly curved die 33, the flexible elongate body 26 passes into the helically extending channel 42 in the outer surface of the rigid body 40 and, as the flexible elongate body travels along the helically extending channel, cooling air is directed from a source (not shown) on to the rigid tube 44 to cause the electrically insulated plastics material 29 of the advancing body to set. The smoothly curved die 33 is of such a shape that reinforcing elements 28 constituting and adjacent to the convex outer arcuate surface of the flexible elongate body 26 are travelling at a greater linear speed than the reinforcing elements remote therefrom. Since the flexible elongate body 26 is travelling along the helical channel 42 in the outer surface of the rigid rod 40, the body is rotating about the rigid rod and the convex arcuate surface of the body is maintained outermost.

The eight flexible bodies 26 being manufactured concurrently are withdrawn continuously from the rigid rods 40 by the eight pairs of longitudinally spaced and reciprocating two-part clamps 50, each of which clamps intermittently and out of sequence with the other so grips the advancing body that helical movement of the body is restrained temporarily, advances a predetermined distance, releases the body which recovers the helical orientation temporarily inhibited by the clamp, and returns to its original position.

Beyond the reciprocating clamps 50, the eight flexible bodies 26 are helically laid around the rigid tubular mandrel 60 and pass through the forming die 70 to form the circumferentially rigid flexible tube 25. Immediately downstream of the die 70, a plastics tape is helically wound around the flexible tube 25, the direction of the lay of the tape being opposite to that of the flexible bodies 26. At the same time, an optical fibre ribbon 21 from the source 110, which is being rotatably driven bodily about the axis of the tube 25 in synchronism with the rotation of the tube about its axis, is fed into the upstream end of the tubular mandrel 60. The circumferentially rigid flexible tube 25 with the optical fibre ribbon 21 loosely housed therein is continuously drawn through the forming die 70 by the longitudinally spaced and reciprocating clamps 90 which are mechanically coupled to the clamps 50. Each of the clamps 90 intermittently and out of sequence with the other grips the advancing flexible tube, advances a predetermined distance, releases the tube and returns to its original position but, as the advancing flexible tube is rotating about its axis, whilst each clamp 90 is gripping the tube and advancing said predetermined distance, the clamp is constrained to rotate with the tube. The flexible tube 25 is fed downwardly on to the turntable 100 which is rotatably driven at such a speed that, in addition to facilitating coiling down of the tube, the rotating turntable also removes any residual torsion in the tube by completing approximately one revolution for each pitch of the laid up helically extending bodies 26.

To complete manufacture of the optical cable shown in Figure 3, in a separate operation the sheath 27 of plastics insulating material is extruded over the plastics tape-covered flexible tube 25.

## Claims

1. A method of manufacturing an optical cable element including a substantially circumferentially rigid longitudinally flexible tube loosely housing at least one flexible optical guide and comprising a plurality of flexible elongate bodies, each having a transverse cross-section approximating to a sector of an annulus, helically laid-up together, each of which bodies throughout its length is made of a multiplicity of longitudinally stressed elongate flexible non-metallic reinforcing elements each substantially encapsulated in extruded electrically insulating plastics material, the multiplicity of non-metallic reinforcing elements being substantially evenly distributed throughout the cross-sectional area of the tube, which method comprises the steps of:

   a) drawing a multiplicity of flexible elongate non-metallic reinforcing elements (28) under tension in the directions of their lengths through electrically insulating plastics material (29) which is in a liquid or semi-liquid state; causing the multiplicity of non-metallic reinforcing elements encapsulated in electrically insulating plastics material in a liquid or semi-liquid state to pass through an elongate die (33) having an outlet orifice (35) having a transverse cross-section approximating to a sector of an annulus to form a flexible elongate body (6,16,26) which has a transverse cross-section approximating to a sector of an annulus and in which the multiplicity of non-metallic reinforcing elements are substantially evenly distributed throughout the cross-sectional area of the body, which die, between its ends, is of such a shape that non-metallic reinforcing elements constituting and adjacent to the convex outer arcuate surface of the flexible elongate body so formed are travelling at a greater linear speed than non-metallic reinforcing elements remote therefrom;

   b) causing the flexible elongate body (6,16,26) as it emerges from the die (33) to follow a helical path within an imaginary cylinder of substantially circular cross-section in such a way that the convex outer arcuate surface of the body is maintained outermost and so treating the helically advancing body that the plastics material (29) in which the reinforcing elements (28) are encapsulated sets;

   c) laying up the helically advancing flexible elongate body (6,16,26) with a plurality of helically advancing flexible elongate bodies of similar transverse cross-section and construction to form a flexible tube (5,15,25) of approximately circular transverse cross-section which is rotating about its longitudinal axis and feeding at least one flexible optical guide (1,11,21) into the bore of the tube as it is being formed; and

   d) taking up the flexible tube thus formed in such a way that any residual torsion in the tube arising from said rotation is removed.

2. A method as claimed in Claim 1, wherein the elongate die (33) follows a smoothly curved arcuate path, the internal surface of the die defining the convex outer arcuate surface of the flexible elongate body having a greater radius of curvate than that of the internal surface of the die defining the concave inner arcuate surface of the body.

3. A method as claimed in Claim 2, wherein, over at least a major part of the length of the smoothly curved elongate die (33), the internal surface of the die defining the convex outer arcuate surface of the sector-shaped elongate body (6,16,26) and the internal surface of the die defining the concave inner arcuate surface of the flexible elongate body are so curved that the transverse cross-section of the smoothly curved elongate die is substantially constant in shape and size to ensure that the non-metallic reinforcing elements (28) are drawn through the die at the desired linear speeds relative to one another.

4. A method as claimed in Claim 3, wherein, at its entry end, the elongate die (33) opens into and forms part of an open-topped chamber (30) into which the electrically insulated plastics material (29) in a liquid or semi-liquid state is fed and the multiplicity of flexible elongate non-metallic reinforcing elements (28) are drawn under tension approximately vertically downwardly into the chamber.

5. A method as claimed in Claim 4, wherein immediately downstream of the elongate die (33), the flexible elongate body (6,16,26) passes into a helically extending channel (42) of a transverse cross-section approximating to a sector of an annulus in the outer surface of a substantially rigid elongate member (40) enclosed within a tightly fitting tube (44) of substantially circular cross-section and, as the flexible elongate body travels along the helically extending channel, the electrically insulating plastics material (29) in which the elongate flexible non-metallic reinforcing elements (28) are encapsulated is so treated that it is caused to set.

6. A method as claimed in Claim 5, wherein the plastics material (29) in which the non-metallic reinforcing elements (28) are encapsulated is a thermoplastics material, the thermoplastics material is introduced into the chamber (31) at such a temperature that the material is in a liquid or semi-liquid state, the chamber and/or elongate die (33) is or are heated to maintain the material at that temperature, and cooling air is directed on to the helically channelled elongate member (40) in order to cause the plastics material to set.

7. A method as claimed in any one of the preceding Claims, wherein the flexible elongate body (6,16,26) is drawn from the elongate die (33) by a pair of longitudinally spaced and reciprocating clamps (50) each of which intermittently and out of sequence with the other grips the advancing body, advances a predetermined distance, releases the body and returns to its original position so that the body is drawn continuously from the die.

8. A method as claimed in any one of the preceding Claims, wherein the flexible tube (5,15,25) formed by the laid up flexible elongate bodies (6,16,26) and rotating about its longitudinal axis is drawn by a pair of longitudinally spaced reciprocating clamps (90) each of which intermittently and out of sequence with the other grips the advancing flexible tube, advances a predetermined distance, releases the tube and returns to its original position so that the advancing flexible tube is drawn continuously, each clamp, whilst gripping the tube and advancing said predetermined distance, being constrained to rotate with the tube to accommodate said rotation of the flexible tube about its axis.

9. A method as claimed in any one of the preceding Claims, wherein the take up means (100) by which any residual torsion is removed from the rotating flexible tube (5,15,25) is a drum twister or a rotatably driven turntable on to which the rotating flexible tube is so coiled that any residual torsion in the tube is removed.

10. A method as claimed in Claim 9, wherein the source of supply 110) of flexible optical guide (1,11,21) is so mounted that it is bodily rotatable in space and is so mechanically coupled to the take up means (100) that, when the take up means rotates to remove any residual torsion from the rotating flexible tube (5,15,25), the source of supply of flexible optical guide rotates to remove any twist in the optical guide that would otherwise be imparted by rotation of the advancing flexible tube about its longitudinal axis.

## Patentansprüche

1. Verfahren zum Herstellen eines optischen Kabelelements mit einem im wesentlichen umfangsmäßig starren, in Längsrichtung flexiblen Rohrs, das mindestens einen flexiblen optischen Leiter lose beinhaltet und mehrere flexible, längsgestreckte Körper aufweist, wobei jeder in Querrichtung einen Querschnitt hat, der einem Sektor eines Rings angenähert ist, und die schraubenförmig zusammengesetzt sind, jeder der Körper ist über seine Länge aus mehreren in Längsrichtung gespannten längsgestreckten flexiblen nicht-metallischen Verstärkungselementen hergestellt, die im wesentlichen in einem extrudierten elektrisch isolierenden Kunststoffmaterial eingekapselt sind, wobei die mehreren, nicht-metallischen Verstärkungselemente im wesentlichen gleichmäßig über den Querschnittsbereich des Rohrs verteilt sind, wobei das Verfahren die Schritte aufweist:

    a) Ziehen von mehreren flexiblen längsgestreckten nicht-metallischen Verstärkungselementen (28) unter Zug in ihren Längsrichtungen durch elektrisch isolierendes Kunststoffmaterial (29), das in einem flüssigen oder halbflüssigen Zustand ist, Hindurchführen der mehreren nicht-metallischen Verstärkungselemente, die in elektrisch isolierendes Kunststoffmaterial in einem flüssigen oder halbflüssigen Zustand eingekapselt sind, durch eine längsgestreckte Düse (33) mit einer Auslaßöffnung (35) mit einem Querschnitt in Querrichtung, der einem Sektor eines Rings angenähert ist, so daß ein flexibler längsgestreckter Körper (6, 16, 26) gebildet wird, der in Querrichtung einen Querschnitt hat, der einem Sektor eines Rings angenähert ist und bei dem die mehreren nicht-metallischen Verstärkungselemente im wesentlichen gleichmäßig über den Querschnittsbereich des Körpers verteilt sind, wobei die Düse zwischen ihren Enden eine solche Form hat, daß nicht-metallische Verstärkungselemente, die die konvexe äußere gebogene Fläche des so geformten flexiblen längsgestreckten Körpers bilden bzw. benachbart zu dieser sind, mit einer größeren Geschwindigkeit bewegt werden als nicht-metallische Verstärkungselemente, die davon entfernt sind,

b) Führen des flexiblen, längsgestreckten Körpers (6, 16, 26), wenn dieses aus der Düse (33) austritt, auf einem schraubenförmigen Weg in einem imaginären Zylinder von im wesentlichen kreisförmigem Querschnitt in solcher Weise, daß die konvexe äußere gebogene Fläche des Körpers nach außen gehalten wird und Behandeln des schraubenförmig vorwärts bewegten Körpers, so daß das Kunststoffmaterial (29), in dem die Verstärkungselemente (28) eingekapselt sind, sich verfestigt,

c) Aneinanderlegen des schraubenförmig vorwärts bewegten flexiblen längsgestreckten Körpers (6, 16, 26) mit mehreren in Schraubenrichtung vorwärts bewegten flexiblen längsgestreckten Körpern von gleichem Querschnitt in Querrichtung und Aufbau, so daß ein flexibles Rohr (5, 15, 25) mit ungefähr kreisförmigem Querschnitt in Querrichtung gebildet wird, das um seine Längsrichtung dreht und Zuführen von mindestens einem flexiblen optischen Leiter (1, 11, 21) in die Bohrung des Rohrs, wenn dieses gebildet wird, und

d) Aufnehmen des so gebildeten flexiblen Rohrs in solcher Weise, daß jede von der Drehung herrührende Resttorsion in dem Rohr beseitigt wird.

2. Verfahren nach Anspruch 1, wobei die längsgestreckte Düse (33) einem glatt gekrümmten, gebogenen Weg folgt, wobei die Innenfläche der Düse, die die konvexe äußere gebogene Fläche des flexiblen, längsgestreckten Körpers bildet, einen größeren Krümmungsradius hat als die Inenfläche der Düse, die die konkave innere gebogene Fläche des Körpers bildet.

3. Verfahren nach Anspruch 2, wobei über mindestens einen Hauptteil der Länge der glatt gekrümmten längsgestreckten Düse (33) die Innenfläche der Düse, die die konvexe äußere gebogene Fläche des sektorförmigen längsgestreckten Körpers (6, 16, 26) bildet und die Inenfläche der Düse, die die konkave innere gebogene Fläche des flexiblen längsgestreckten Körpers bildet, so gekrümmt sind, daß der Querschnitt in Querrichtung der glatt gekrümmten längsgestreckten Düse im wesentlichen in Form und Größe konstant ist, so daß sichergestellt ist, daß die nichtmetallischen Verstärkungselemente (28) mit den gewünschten linearen Geschwindigkeiten relativ zueinander durch die Düse gezogen werden.

4. Verfahren nach Anspruch 3, wobei an ihrem Eintrittsende die längsgestreckte Düse (33) sich zu einer oben offenen Kammer (30) öffnet und ein Teil derselben bildet, in die das elektrisch isolierende Kunststoffmaterial (29) in einem flüssigen oder halbflüssigen Zustand zugeführt wird und die mehreren flexiblen längsgestreckten nicht-metallischen Verstärkungselemente (28) unter Zug etwa vertikal nach unten in die Kammer gezogen werden.

5. Verfahren nach Anspruch 4, wobei in Stromrichtung direkt nach der längsgestreckten Düse (33) der flexible längsgestreckte Körper (6, 16, 26) in einen sich schraubenförmig erstreckenden Kanal (42) eintritt, der in Querrichtung einen Querschnitt hat, der einem Sektor eines Rings angenähert ist, in der Außenfläche eines im wesentlichen starren längsgestreckten Elements (40), das in einem dicht sitzenden Rohr (44) mit im wesentlichen kreisförmigem Querschnitt eingeschlossen ist und wenn der flexible, längsgestreckte Körper sich entlang des schraubenförmig sich erstreckenden Kanals bewegt, das elektrisch isolierende Kunststoffmaterial (29), in dem die längsgestreckten flexiblen, nicht-metallischen Verstärkungselemente (28) eingekapselt sind, so behandelt wird, daß es sich verfestigt.

6. Verfahren nach Anspruch 5, wobei das Kunststoffmaterial (29), in dem die nicht-metallischen Verstärkungselemente (28) eingekapselt sind, ein thermoplastisches Material ist, wobei das thermoplastische Material in die Kammer (31) bei einer solchen Temperatur eingeleitet wird, daß das Material in einem flüssigen oder halbflüssigen Zustand ist, wobei die Kammer und/oder die längsgestreckte Düse (33) erwärmt ist oder sind, so daß das Material bei dieser Temperatur gehalten wird, und Kühlluft auf das schraubenförmig in Kanälen geführte längsgestreckte Element (40) gerichtet wird, damit sich das Kunststoffmaterial verfestigt.

7. Verfahren nach einem der vorstehenden Ansprüche, wobei der flexible, längsgestreckte Körper (6, 16, 26) aus der längsgestreckten Düse (33) mit Hilfe von zwei in Längsrichtung beabstandeten hin- und hergehenden Klammern (50) herausgezogen wird, wobei jede abwechselnd und außer Folge mit der anderen den sich vorwärts bewegenden Körper greift, eine bestimmte Distanz vorwärtsbewegt, den Körper losläßt und zu ihrer ursprünglichen Position zurückkehrt, so daß der Körper kontinuierlich von der Düse abgezogen wird.

8. Verfahren nach einem der vorstehenden Ansprüche, wobei das flexible Rohr (5, 15, 25), das von den aneinandergelegten flexiblen längsgestreckten Körpern (6, 16, 26) gebildet wird und um seine Längsachse dreht, von zwei in Längsrichtung beabstandeten hin- und hergehenden Klammern (90) gezogen wird, wobei jede abwechselnd und außer Folge mit der anderen das sich vorwärts bewegende flexible Rohr ergreift, eine bestimmte Distanz vorwärtsbewegt, das Rohr freigibt und zu ihrer ursprünglichen Position zurückkehrt, so daß das vorwärtsbewegte flexible Rohr kontinuierlich abgezogen wird, wobei jede Klammer während des Greifens des Rohrs und Vorwärtsbewegen um eine bestimmte Distanz mit dem Rohr gedreht wird, so daß diese der Drehung des flexiblen Rohrs um seine Achse angepaßt ist.

9. Verfahren nach einem der vorstehenden Aisprüche, wobei die Aufnahmeeinrichtungen (100), mit denen jede Resttorsion von dem drehenden flexiblen Rohr (5, 15, 25) beseitigt wird, eine Trommeldreheinrichtung oder ein drehbarer angetriebener Drehtisch ist, auf dem das sich drehende flexible Rohr so aufgewickelt wird, daß jede Resttorsion in dem Rohr beseitigt wird.

10. Verfahren nach Anspruch 9, wobei die Zuführquelle (110) des flexiblen optischen Leiters (1, 11, 21) so angeordnet ist, daß diese körpermäßig im Raum drehbar ist und so mit der Aufnahmeeinrichtung (100) mechanisch verbunden ist, daß, wenn sich die Aufnahmeeinrichtung zum Beseitigen von jeglicher Resttorsion von dem drehenden flexiblen Rohr (5, 15, 25) dreht, sich die Zuführquelle des flexiblen optischen Leiters dreht, so daß jegliche Drehung in dem optischen Leiter beseitigt wird, die andernfalls durch die Drehung des sich vorwärts bewegenden flexiblen Rohrs um seine Längsachse aufgebracht werden würde.

**Revendications**

1. Procédé de fabrication d'un élément de câble optique comportant un tube souple dans la direction longitudinale et sensiblement rigide dans la direction circonférentielle, contenant sans le serrer au moins un guide optique souple et comprenant une pluralité de corps souples allongés, chacun à section transversale approximativement en forme de secteur de tore, disposés en hélice, chacun de ces corps étant constitué sur toute sa longueur d'une multiplicité d'éléments allongés souples non métalliques d'armature soumis à des contraintes longitudinales et sensiblement enrobés chacun d'une matière plastique extrudée électriquement isolante, la multiplicité d'éléments non métalliques d'armature étant répartis d'une manière sensiblement uniforme sur toute la surface de la section transversale du tube, ledit procédé comportant les étapes:

a) passage d'une multiplicité d'éléments allongés souples non métalliques d'armature (28) sous traction dans le sens de leur longueur à travers une matière plastique (29) électriquement isolante à l'état liquide ou semi-liquide; passage de la multiplicité d'éléments non métalliques d'armature enrobés de la matière plastique électriquement isolante à l'état liquide ou semi-liquide dans une filière allongée (33) ayant un orifice de sortie (35) à section transversale approximativement en forme de secteur de tore pour former un corps souple allongé (6,16, 26) à section transversale approximativement en forme de secteur de tore et dans lequel la multiplicité d'éléments non métalliques d'armature sont répartis d'une manière sensiblement uniforme sur toute la surface de la section transversale du corps, laquelle filière, entre ses extrémités, a une forme telle que les éléments non métalliques d'armature, constituant le corps souple allongé ainsi formé et situés au voisinage immédiat de la surface extérieure convexe arquée de ce dernier, se déplacent à une vitesse linéaire supérieure à celle des éléments non métalliques d'armature éloignés de ladite surface;

b) guidage du corps souple allongé (6, 16, 26), à mesure qu'il sort de la filière (33), pour qu'il suive un parcours hélicoïdal dans un cylindre imaginaire à section transversale sensiblement circulaire de telle manière que la surface extérieure convexe arquée du corps soit maintenue tout à l'extérieur, et traitement du corps qui progresse suuivant une hélice de façon que la matière plastique (29) avec laquelle sont enrobés les éléments d'armature (28) durcisse;

c) assemblage du corps souple allongé (6, 16, 26) qui progresse en hélice sur une pluralité de corps souples allongés progressant en hélice, à section transversale et construction semblables, pour former un tube souple (5, 15, 25) à section transversale approximativement circulaire qui tourne autour de son axe longitudinal et introduction d'au moins un guide optique souple (1, 11, 21) dans le trou du tube au fur et à mesure de sa formation; et

d) enroulement du tube souple ainsi formé de telle façon que toute torsion résiduelle dans le tube par suite de ladite rotation soit supprimée.

2. Procédé selon la revendication 1, dans lequel la filière allongée (33) suit un parcours arqué à courbure régulière, la surface interne de la filière définissant la surface extérieure arquée convexe du corps souple allongé ayant un rayon de courbure plus grand que celui de la surface interne de la filière définissant la surface intérieure arquée concave du corps.

3. Procédé selon la revendication 2, dans lequel, sur au moins une majeure partie de la longueur de la filière allongée (33) à courbure régulière, la surface interne de la filière définissant la surface extérieure arquée convexe du corps allongé (6, 16, 26) en forme de secteur et la surface interne de la filière définissant la surface intérieure arquée concave du corps souple allongé sont incurvées de telle façon que la section transversale de la filière allongée à courbure régulière soit de forme et de dimensions sensiblement constantes afin que les éléments non métalliques (28) d'armature soient entraînés à travers la filière aux vitesses linéaires voulues les uns par rapport aux autres.

4. Procédé selon la revendication 3, dans lequel, à son extrémité d'entrée, la filière allongée (33) débouche dans et fait partie d'une chambre (30) ouverte à son sommet et dans laquelle la matière plastique électriquement isolante (29) à l'état liquide ou semi-liquide est introduite et la multiplicité d'éléments allongés souples non métalliques (28) d'armature sont entraînés sous traction à peu près verticalement vers le bas dans la chambre.

5. Procédé selon la revendication 4, dans lequel, immédiatement en aval de la filière allongée (33), le corps souple allongé (6, 16, 26) pénètre dans un conduit (42) en hélice, à section transversale approximativement en forme de secteur de tore, de la surface extérieure d'une pièce allongée sensiblement rigide (40) contenu dans un tube (44) à emmanchement serré à section transversale sensiblement circulaire, et, à mesure que le corps souple allongé se déplace le long du conduit hélicoïdal, la matière plastique électriquement isolante (29) avec laquelle sont enrobés les éléments souples allongés non métalliques (28) d'armature est traitée de manière à provoquer son durcissement.

6. Procédé selon la revendication 5, dans lequel la matière plastique (29) avec laquelle sont enrobés les éléments non métalliques (28) d'armature est une matière thermoplastique, la matière thermoplastique est introduite dans la chambre (31) à une température telle que la matière est à l'état liquide ou semi-liquide, la chambre et/ou la filière allongée (33) est ou sont chauffée(s) pour maintenir la matière à cette température, et de l'air de refroidissement est dirigé jusque sur la pièce allongée (40) à conduit hélicoïdal afin de provoquer le durcissement de la matière plastique.

7. Procédé selon l'une quelconque des revendications précédentes, dans lequel le corps souple allongé (6, 16, 26) est extrait de la filière allongée (33) par une paire de pinces de serrage (50) espacées dans la direction longitudinale et à mouvement alternatif dont chacune, par intermittence et sans coordination avec l'autre, saisit le corps qui progresse, avance d'une certaine distance, lâche de corps et revient dans sa position d'origine de façon que le corps soit extrait d'une manière continue de la filière.

8. Procédé selon l'une quelconque des revendications précédentes, dans lequel le tube souple (5, 15, 25) formé par les corps souples allongés assemblés (6, 16, 26) et tournant autour de son axe longitudinal est entraîné par une paire de pinces de serrage (90) espacées dans la direction longitudinale et à mouvement alternatif dont chacune, par intermittence et sans coordination avec l'autre, saisit le tube souple qui progresse, avance d'une certaine distance, lâche le tube et revient dans sa position d'origine de façon que le tube souple en train d'avancer soit extrait d'une manière continue, chaque pince, tout en serrant le tube et en avançant de ladite distance prédéterminée, étant forcée à tourner avec le tube pour s'adapter à ladite rotation du tube souple autour de son axe.

9. Procédé selon l'une quelconque des revendications précédentes, dans lequel le moyen d'enroulement (100) par lequel toute torsion résiduelle dans le tube souple (5, 15, 25) est éliminé est un organe de torsion à tambour ou un plateau entraîné en rotation sur lequel le tube souple en rotation est enroulé de façon que toute torsion résiduelle soit supprimée dans le tube.

10. Procédé selon la revendication 9, dans lequel la source d'alimentation (110) en guide optique souple (1, 11, 21) est montée de façon à pouvoir tourner d'une seule pièce dans l'espace et est mécaniquement reliée au moyen d'enroulement (100) de façon que, lorsque le moyen d'enroulement tourne pour éliminer toute torsion résiduelle du tube souple (5, 15, 25) en rotation, la source d'alimentation en guide optique souple tourne pour supprimer dans le guide optique toute torsion qui, autrement, serait communiquée du fait de la rotation, autour de son axe longitudinal, du tube souple en train d'avancer.

Fig.1.

Fig.2.

Fig.3.

Fig.4.

EP 0 336 738 B1

Fig.5.

COOLING AIR

EP 0 336 738 B1